# NEUE EUROPÄISCHE PATENTSCHRIFT

(11) **EP 0 951 520 B2**
(45) Veröffentlichungstag und Bekanntmachung des Hinweises auf die Entscheidung über den Einspruch: **02.08.2006**
(45) Hinweis auf die Patenterteilung: 27.11.2002
(21) Anmeldenummer: 97942927.1
(22) Anmeldetag: 15.09.1997
(51) Int. Cl.: C09K 19/02, C09K 19/38

(54) **FLÄCHENGEBILDE MIT CHOLESTERISCH, FLÜSSIGKRISTALLINER ORDNUNGSSTRUKTUR**
FLAT ELEMENT WITH A CHOLESTERIC LIQUID CRYSTAL STRUCTURE
ELEMENT PLAT AYANT UNE STRUCTURE A CRISTAUX CHOLESTERIQUES

(30) Priorität: 01.10.1996 DE 19640619
(43) Veröffentlichungstag der Anmeldung: 27.10.1999
(73) Patentinhaber: BASF Aktiengesellschaft, 67056 Ludwigshafen (DE)
(72) Erfinder: SIEMENSMEYER, Karl, D-67227 Frankenthal (DE); SCHUHMACHER, Peter, D-68163 Mannheim (DE); BRÖCHER, Markus, D-57250 Nethpen (DE); KUCKERTZ, Christian, D-57462 Olpe (DE); MORMANN, Werner, D-57068 Siegen (DE)
(86) Internationale Anmeldenummer: PCT/EP1997/005031
(87) Internationale Veröffentlichungsnummer: WO 1998/014528

(56) Entgegenhaltungen:
- EP-A- 0 747 382
- WO-A-93/22397
- WO-A-96/17901
- WO-A-97/35219
- DE-A- 4 342 280
- DE-A- 19 504 224
- PATENT ABSTRACTS OF JAPAN vol. 013, no. 515 (C-655), 17.November 1989 & JP 01 207328 A (ASAHI GLASS CO LTD), 21.August 1989,
- G.G. Barclay et al, Progress in Polymer Science, 18, S. 899-945, 1993

## Beschreibung

Wie für formanisotrope Medien bekannt, können beim Erwärmen flüssigkristalline Phasen, sogenannte Mesophasen, auftreten. Die einzelnen Phasen unterscheiden sich durch die räumliche Anordnung der Molekülschwerpunkte einerseits sowie durch die Molekülanordnung hinsichtlich der Längsachsen andererseits (G.W. Gray, P.A. Winsor, Liquid Crystals and Plastic Crystals, Ellis Horwood Limited, Chichester 1974). Die nematisch flüssigkristalline Phase zeichnet sich dadurch aus, daß lediglich eine Orientierungsfernordnung durch Parallellagerung der Moleküllängsachsen existiert. Unter der Voraussetzung, daß die die nematische Phase aufbauenden Moleküle chiral sind, entsteht eine sogenannte cholesterische Phase, bei der die Längsachsen der Moleküle eine zu ihnen senkrechte, helixartige Überstruktur ausbilden (H. Baessier, Festkörperprobleme XI, 1971). Der chirale Molekülteil kann sowohl im flüssigkristallinen Molekül selbst vorhanden sein als auch als Dotierstoff zur nematischen Phase gegeben werden, wobei die cholesterische Phase induziert wird. Dieses Phänomen wurde zuerst an Cholesterolderivaten untersucht (z. B. H. Baessler, M.M. Labes, J. Chem. Phys., 52, 631 (1970); H. Baessler, T.M. Laronge, M.M. Labes, J. Chem. Phys., 51 799 (1969); H. Finkelmann, H. Stegemeyer, Z. Naturforschg. 28a, 799 (1973); H. Stegemeyer, K.J. Mainusch, Naturwiss., 58, 599 (1971), H. Finkelmann, H. Stegemeyer, Ber. Bunsenges. Phys. Chem. 78, 869 (1974).).

Die cholesterische Phase hat bemerkenswerte optische Eigenschaften: eine hohe optische Rotation sowie einen ausgeprägten Zirkulardiehrolsmus, der durch Selektivreflexion von zirkular polarisiertem Licht innerhalb dercholesterischen Schicht entsteht. Die je nach Blickwinkel unterschiedlich erscheinenden Farben sind abhängig von der Ganghöhe der helixartigen Überstruktur, die ihrerseits vom Verdrillungsvermögen der chiralen Komponente abhängt. Dabei kann insbesondere durch Änderung der Konzentration eines chiralen Dotierstoffes die Ganghöhe und damit der Wellenlängenbereich des selektiv reflektierten Lichtes einer cholesterischen Schicht variiert werden. Solche cholesterischen Systeme bieten für eine praktische Anwendung interessante Möglichkeiten. So kann durch Einbau chiraler Molekülteile in mesogene Acrylsäureester und Orientierung in der cholesterischen Phase, z.B. nach der Photovemetzung, ein stabiles, farbiges Netzwerk hergestellt werden, dessen Konzentration an chiraler Komponente dann aber nicht mehr verändert werden kann (G. Galli, M. Laus, A. Angelon, Makromol. Chemie, 187, 289 (1986)). Durch Zumischen von nichtvernetzbaren chiralen Verbindungen zu nematischen Acrylsäureestern kann durch Photovernetzung ein farbiges Polymer hergestellt werden, welches noch hohe Anteile löslicher Komponenten enthält (I. Heyndricks, D. J. Broer, Mol. Cryst. Liq. Cryst. 203, 113 (1991)). Weiterhin kann durch statistische Hydrosilyllerung von Gemischen aus Cholesterolderivaten und acrylathaltigen Mesogenen mit definierten zyklischen Siloxanen und anschließende Photopolymerisation ein cholesterisches Netzwerk gewonnen werden, bei dem die chirale Komponente einen Anteil von bis zu 50 % an dem eingesetzten Material haben kann; diese Polymerisate enthalten jedoch noch deutliche Mengen löslicher Anteile (F.H. Kreuzer, R. Maurer, Ch. Müller-Rees, J. Stohrer, Vortrag Nr. 7, 22. Freiburger Arbeitstagung Flüssigkristalle, Freiburg, 1993).

In der Anmeldung DE-OS-35 35 547 wird ein Verfahren beschrieben, bei dem eine Mischung cholesterolhaltiger Monoacrylate über eine Photovernetzung zu cholesterischen Schichten verarbeitet werden kann. Allerdings beträgt der Gesamtanteil der chiralen Komponente in der Mischung ca. 94 %. Als reines Seitenkettenpolymer ist ein solches Material zwar mechanisch nicht sehr stabil, eine Erhöhung der Stabilität kann aber durch hochvemetzende Verdünnungsmittel erreicht werden.

Neben oben beschriebenen nematischen und cholesterischen Netzwerken sind auch smektische Netzwerke bekannt, welche insbesondere durch Photopolymerisation/Photovemetzung von smektisch flüssigkristallinen Materialien in der smektisch flüssigkristallinen Phase hergestellt werden. Die hierfür verwendeten Materialien sind in der Regel symmetrische, flüssigkristalline Bisacrylate, wie sie z.B. D.J. Broer und R.A.M. Hikmet, Makromol. Chem., 190, 3201-3215 (1989) beschrieben haben. Diese Materialien weisen aber sehr hohe Klärtemperaturen von > 120°C auf, so daß die Gefahr einer thermischen Polymerisation gegeben ist. Durch Zumischen chiraler Materialien können beim Vorliegen einer S_{c}-Phase piezoelektrische Eigenschaften erzielt werden (R.A.M. Hikmet, Macromolecules 25, S. 5759, 1992).

Aus der Veröffentlichung von H. Kömer und C.K. Ober in Polymer Materials, Science and Engineering, 73, 456-457 (1995), sind z.B. flüssigkristalline Cyanate bekannt, die thermisch härtbar sind. Weiterhin sind aus Progress in Polymer Sciene, 18, 899-945 (1993), Autoren E.E. Barclay und C.K. Ober, ebenfalls entsprechende flüssigkristalline Verbindungen bekannt, die als reaktive Gruppen Epoxide aufweisen.

Thermisch vemetzbare cholesterisch flüssigkristalline Systeme sind bisher nicht beschrieben worden.

Die Erfindung betrifft nun durch thermische Härtung erhältliche, vernetzte cholesterisch flüssigkristalline Ordnungsstruktur aufweisende Flächengebilde, hergestellt aus Mischungen von nematisch flüssigkristallinen Verbindungen oder in nematisch flüssigkristalline Verbindungen übergehende Verbindungen (potentiell nematische Verbindungen) und einer chiralen Komponente der allgemeinen Struktur

(Z-Y¹-A-Y²-M-Y³)ₙ X I

in der die Variablen folgende Bedeutung haben:
- A: Spacer,
- M: mesogene Gruppen,
- Y¹,Y²,Y³: chemische Bindungen oder die Gruppierungen -O-; -S-; -CO-O-; -O-CO-; -O-CO-O-; -CO-N(R) - oder -N(R)-CO-,
- R: Wasserstoff oder C₁-C₄-Alkylgruppen,
- X: ein Rest der Formel 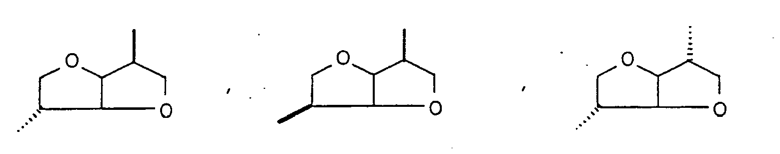 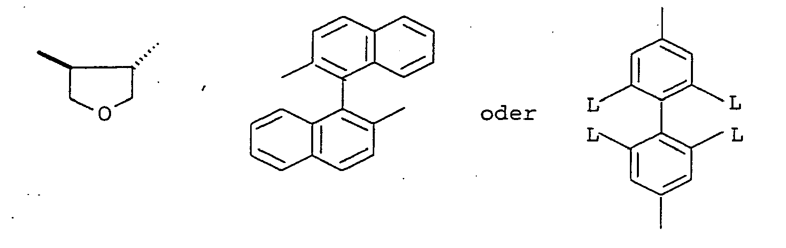
- n: 2 bis 6 und
- Z: a) mindestens einmal ein Rest mit einer Isocyanat-, Isothiocyanat-, Cyanat-, Thiiran-, Aziridin-, Carboxyl-, Hydroxy- oder Aminogruppe und
b) die übrigen Reste Wasserstoff oder nicht-reaktive Reste sind, wobei die Reste
- L: unabhängig voneinander für C₁-C₄-Alkyl oder -Alkoxy, Halogen, -CO-OR, -O-CO-R, -CO-NH-R oder -NH-CO-R stehen und
die Reste Z, Y¹, Y², Y³, A und M, da sie n-mal in I enthalten sind, gleich oder verschieden sein können,
wobei zumindest die nematische und/oder die in die nematisch flüssigkristalline Verbindung übergehende Komponente mindestens eine thermisch polymerisierbare Gruppe tragen.

Die erfindungsgemäßen Flächengebilde haben eine Überstruktur wie sie cholesterische Flüssigkristalle aufweisen. Die Überstruktur ist entweder schon vor der Vernetzung vorhanden oder sie bildetsich während der Vernetzung aus. Sie wird erzeugt
a) aus chiral-nematischen flüssigkristallinen Verbindungen,
b) aus einer nematischen und einer chiralen flüssigkristallinen Verbindung,
c) aus einer nematisch flüssigkristallinen und einer chiralen nicht flüssigkristallinen Verbindung oder
d) aus einer nicht nematischen aber bei der thermischen Härtung in eine nematisch flüssigkristalline Struktur übergehenden Verbindung und einer chiralen Verbindung.

Bevorzugte chirale Verbindungen sind: 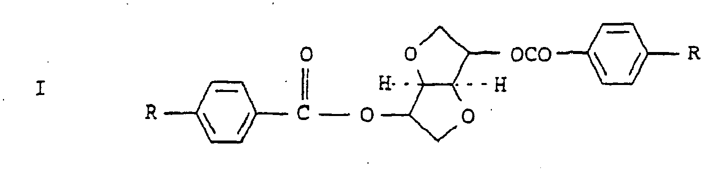 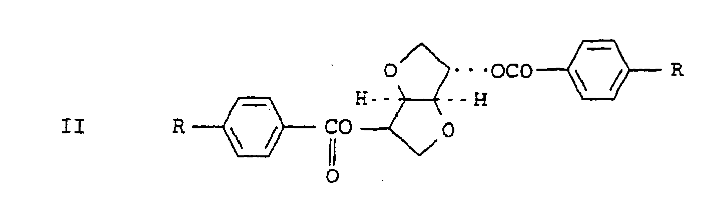 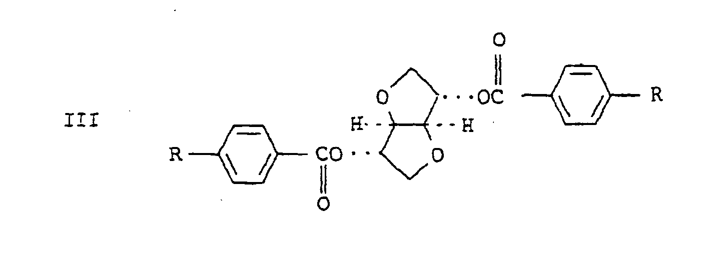 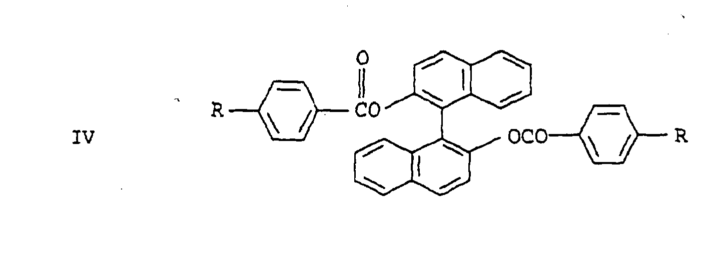 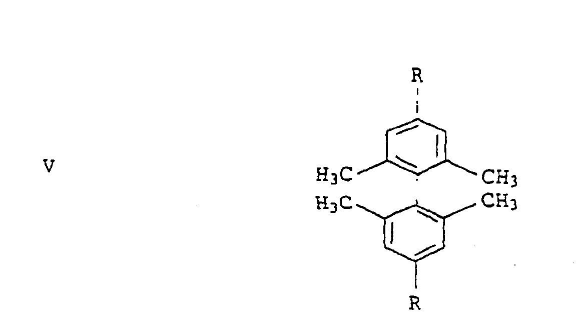 wobei R OH, OCN, ONC oder 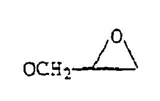 ist.

Die gemäß a) bis c) notwendigen nematischen Verbindungen müssen aus der Vielzahl der bekannten thermisch vernetzbaren Strukturen ausgewählt werden, wobei folgende Gesichtspunkte zu berücksichtigen sind:
1. Die nematische flüssigkristallinen Verbindungen sollten eine genügend große Phasenbreite aufweisen.
2. Die Mischbarkeit mit chiralen Komponenten gemäß b) und c) muß gewährleistet sein.
3. Eine güte Mischbarkeit mit anderen thermisch vernetzbaren Flüssigkristallen ist zur Absenkung der Kristallisationstemperatur bzw. Erhöhung des Klärpunktes wünschenswert.
4. Die Temperatur, bei der die Härtung vorgenommen wird, sollte möglichst niedrig liegen, günstig ist der Bereich zwischen 80 und 200°C, vorzugsweise 80 bis 130°C.

Folgende Verbindungen, die diese Kriterien weitgehend erfüllen, seinen beispielhaft genannt:

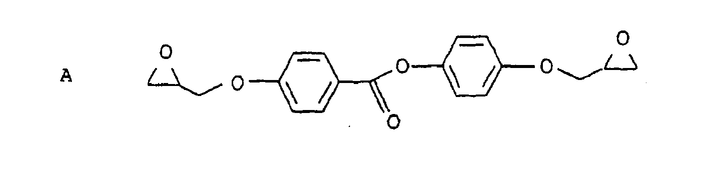

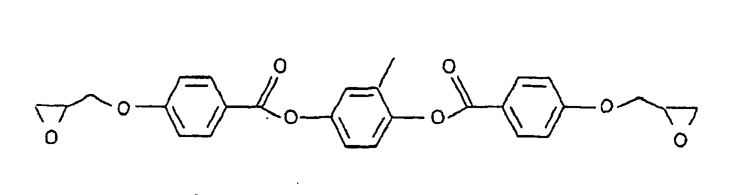

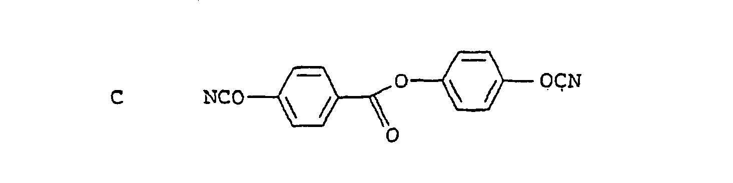

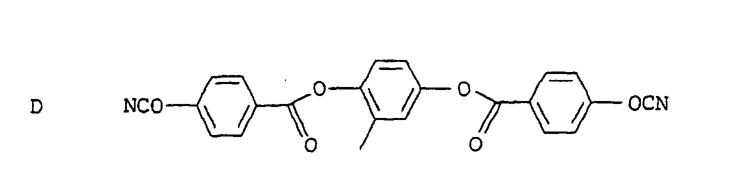

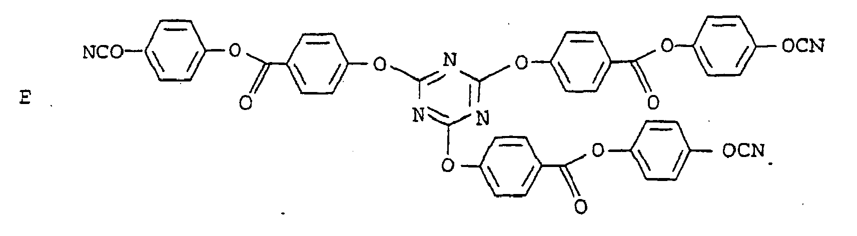

Die Kombination der Verbindungen A und B ermöglicht eine Absenkung der Schmelzpunkte im Vergleich zur Verwendung der Einzelkomponenten. Gleiches gilt für die Komponenten C und D. Zur Härtung der Komponenten A und B werden wie bekannt Amine verwendet, die in stöchiometrischer Menge zugesetzt werden. Es ist dabei von Vorteil, strukturähnliche Amine, bevorzugt Diamine, wie beispielsweise 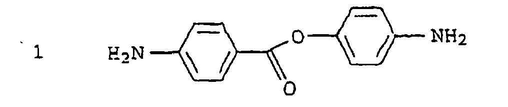 oder 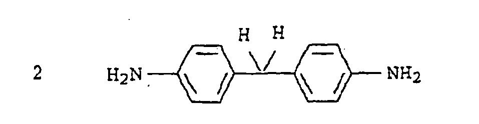 zu verwenden.

Da die Aminkomponente in der Regel nicht flüssigkristall in ist, muß das Gesamtsystem so aufeinander abgestimmt werden, daß bei der Härtung ein flüssigkristallines System entsteht oder erhalten bleibt.

Einzelheiten der Zusammensetzung solcher Systeme können den Beispielen entnommen werden, in denen sich Angaben über Teile und Prozente, sofern nicht anders vermerkt, auf das Gewicht beziehen.

Cyanate und Isocyanate benötigen im Gegensatz zu den Epoxiden keine zusätzlichen Komponenten zur Härtung.

Die erfindungsgemäßen Flächengebilde eignen sich z.B. für dekorative Beschichtungen, zur Herstellung von Sicherheitsmerkmalen, pigmentären Teilchen, Polarisatoren, Farbfiltern und IR-Reflektoren.

Die Ausgangsprodukte für die erfindungsgemäßen Flächengebilde werden zweckmäßigerweise unter Kühlung und vorzugsweise in gelöster Form bis zur Homogenität gemischt und anschließend vom Lösungsmittel befreit. Um jede vorzeitige Polymerisation auszuschließen, kann die Entfernung des oder der Lösemittel durch Gefriertrocknung angebracht sein. Die Bedingungen für Mischung und Trocknung sind systemabhängig und müssen entsprechend gewählt werden.

Geeignete Lösemittel sollten leichtflüssig sein und müssen ein gutes Lösevermögen für die Komponenten aufweisen.

Beispielsweise können Ketone, Lactone, Ester, Ether, Kohlenwasserstoffe oder Halogenkohlenwasserstoffe wie Aceton, Methylethylketon, Butyrolacton, Essigsäure-methyl-, -ethyl- oder -butylester, Diethylether, Dioxan, Tetrahydrofuran, Methyl-t-butylether, Toluol, Methylenchlorid oder Chloroform genannt werden.

Das Mischungsverhältnis nematische Komponente (potentiell nematische Komponente)/chirale Komponente richtet sich nach dem geplanten Verwendungszweck der erfindungsgemäßen Flächengebilde. Insbesondere die Farbe wird durch den chiralen Anteil bestimmt, da sie von der Komponente selbst und deren helical twisting power bestimmt wird. In den Beispielen sind entsprechende Angaben enthalten.

### Allgemeine Arbeitsvorschrift zur Herstellung der Mischungen

Zur Darstellung der Mischungen werden die einzelnen Komponenten in einem für die Gefriertrocknung geeigneten Lösungsmittel, hier bevorzugt Dioxan, gelöst. Die Konzentrationen der Monomeren betragen zwischen 0,005 bis 0,01 mol/l. Aus diesen Stammlösungen werden je nach der gewünschten Zusammensetzung die entsprechenden Volumenteile gemischt, schockgefrostet und anschließend gefriergetrocknet.

### Beispiele

a) Niedrig schmelzende flüssigkristalline Mischungen, die thermisch vernetzbar sind aus den Komponenten A und B:

**Tabelle 1**

| Zusammensetzung | | Schmelztemperatur | Klärtemperatur |
|---|---|---|---|
| [Mol-% A] | [Mol-% B] | [°C] | [°C] |
| 0 | 100 | 130 | 212 |
| 30 | 70 | 116 | 180 |
| 50 | 50 | 75 | 152 |
| 60 | 40 | 85 | 140 |
| 70 | 30 | 90 | 135 |
| 80 | 20 | 96 | 120 |
| 90 | 10 | 104 | 110 |
| 100 | 0 | 106 | 90 |

Wie aus der Tabelle ersichtlich, kann durch Herstellung von Mischungen die Schmelztemperatur deutlich abgesenkt werden. Es ist jedoch sinnvoll, die Mischungen über Lösung herzustellen. Ineinanderschmelzen, der übliche Prozeß zur Mischungsherstellung, kann zur vorzeitigen Vernetzung führen und ist damit nicht geeignet.
b) Einfluß von 4,4'-Diaminophenylbenzoat (1)
Für die Experimente werden Mischungen aus A und B verwendet, die so mit 1 versetzt werden, daß äquimolare Verhältnisse der reaktiven Gruppen erhalten werden. Die Mischungen werden auch über Lösung hergestellt. Zur Bestimmung der Daten werden die Mischungen im Mikroskop mit einer Heizrate von 10°C/min aufgeheizt und das mikroskopische Bild beobachtet. Die Schmelzund Glastemperaturen werden aus DSC-Untersuchungen (differential scanning calorimetry) erhalten.

**Tabelle 2**

| Zusammensetzung | | | Schmelzpunkt | Glastemperatur | Bemerkungen |
|---|---|---|---|---|---|
| [Gew.-% A] | [Gew.-% B] | [Gew.-% 1] | [°C] | [°C] | |
| 74,9 | | 25,1 | 104 | 154 | härtet isotrop |
| 66,4 | 9,9 | 23,7 | 44-87 | 155 | härtet isotrop |
| 57,04 | 19,97 | 22,99 | 45-95 | 151 | härtet isotrop |
| 48,53 | 29,11 | 22,36 | 42-90 | 149 | härtet zweiphasig |
| 40,53 | 37,7 | 21,77 | 45-85 | 161 | härtet zweiphasig |
| 33,1 | 45,6 | 21,3 | 44-90 | 165 | härtet nematisch |
| 18,4 | 61,4 | 20,2 | 42-88 | 162 | härtet nematisch |
| 6,0 | 74,8 | 19,2 | 75-100 | 157 | härtet nematisch |

| | | | | | |
|---|---|---|---|---|---|
| | 80,7 | 19,3 | 80-90 | 154 | härtet nematisch |

c) Einfluß von 4,4'-Diaminodiphenylmethan (2) Für die Experimente werden Mischungen aus A und B verwendet, die so mit2 versetzt werden, daß äquimolare Verhältnisse der reaktiven Gruppen erhalten werden. Die Mischungen werden auch über Lösung hergestellt. Zur Bestimmung der Daten werden die Mischungen im Mikroskop mit einer Heizrate von 10°C/min aufgeheizt und das mikroskopische Bild beobachtet. Die Schmelz- und Glastemperaturen werden aus DSC-Untersuchungen erhalten.

**Tabelle 3**

| Zusammensetzung | | | Schmelzpunkt | Glastemperatur | Bernerkungen |
|---|---|---|---|---|---|
| [Gew.-% A] | [Gew.-% B] | [Gew.-% 2] | [°C] | [°C] | |
| 77,5 | | 22,5 | 104 | 154 | |
| 68,0 | 10,2 | 21,8 | 44-87 | 155 | härtet isotrop |
| 58,4 | 20,5 | 21,2 | 45-95 | 151 | härtet isotrop |
| 49,6 | 29,8 | 20,6 | 42-90 | 149 | härtet zweiphasig |
| 41,4 | 38,5 | 20,1 | 45-85 | 161 | härtet zweiphasig |
| 33,9 | 46,6 | 19,5 | 44-90 | 165 | härtet nematisch |
| 18,8 | 62,7 | 18,5 | 42-88 | 162 | härtet nematisch |
| 6,1 | 76,3 | 17,6 | 75-100 | 157 | härtet nematisch |
| | 82,7 | 17,3 | 80-90 | 154 | härtet nematisch |
| Anmerkungen: | | | | | |
| "Härtet isotrop" bedeutet, daß unter den gewählten Bedingungen keine flüssigkristalline Phase beobachtet wird. | | | | | |
| "Härtet zweiphasig" bedeutet, daß unter den gewählten Bedingungen eine isotrope und eine flüssigkristalline Phase nebeneinander auftreten. | | | | | |
| "Härtet nematisch" bedeutet, daß nur eine flüssigkristalline Phase gebildet wird. | | | | | |

### Beispiel 1

Chirale Netzwerke auf Basis von A, B, II mit

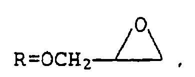

### 1 und 2

Für die Experimente werden Mischungen aus A und B eingesetzt, welche mit der chiralen Komponente II dotiert werden. Die Aminkomponente (Verb. 1 oder 2) wird in einer Menge zugesetzt, daß das molare Verhältnis der Epoxid- und Amingruppe 2:1 beträgt. Die Mischungen werden auch über Lösung hergestellt. Zur Bestimmung der Daten werden die Mischungen im Mikroskop mit einer Heizrate von 10°C/min aufgeheizt und das mikroskopische Bild beobachtet. Die Schmelz- und Glastemperaturen werden aus DSC-Untersuchungen erhalten.

**Tabelle 4**

| Zusammensetzung | | | | | Farbe | T_{cure} | t_{cure} |
|---|---|---|---|---|---|---|---|
| Gew.-% A | Gew.-% B | Gew.-% II | Gew.-% 1 | Gew.-% 2 | | [°C] | [min] |
| 54,41 | 18,96 | 3,84 | 22,79 | | | 110 | |
| 54,41 | 18,96 | 3,84 | 22,79 | | | 120 | |
| 55,59 | 19,37 | 3,92 | | 21,12 | | 110 | |
| 55,59 | 19,37 | 3,92 | | 21,12 | | 120 | |
| 55,59 | 19,37 | 3,92 | | 21,12 | | 150 | |
| 54,25 | 18,90 | 5,74 | | 21,11 | gelb | 150 | |
| | 75,52 | 4,96 | 34,14 | | gelb-orange | 95 | 40 |
| | 75,52 | 4,96 | 34,14 | | gelb | 100 | 60 |
| | 75,52 | 4,96 | 34,14 | | gelb-grün | 110 | 60 |
| | 75,52 | 4,96 | 34,14 | | grün-blau | 130 | 45 |
| | 75,52 | 4,96 | 34,14 | | blau-grün | 140 | 40 |
| | 75,52 | 4,96 | 34,14 | | blau | 150 | 20 |
| | 75,52 | 4,96 | 34,14 | | blau-violett | 160 | 20 |
| | 75,52 | 4,96 | 34,14 | | blau-violett | 180 | 15 |
| | 78,68 | 1,91 | 19,41 | | IR | 150 | 20 |
| | 78,03 | 2,53 | 19,44 | | IR | 150 | 20 |
| | 77,40 | 3,14 | 19,46 | | orange-rot | 150 | 20 |
| | 75,56 | 4,90 | 19,54 | | blau | 150 | 20 |
| | 74,38 | 6,03 | 19,59 | | blau-violett | 150 | 20 |
| | 77,49 | 5,09 | | 17,42 | hell- blau | 150 | 10 |
| | 77,49 | 5,09 | | 17,42 | gelb | 140 | 10 |
| | 77,49 | 5,09 | | 17,42 | gelb | 130 | 20 |
| T_{cure} = Härtungstemperatur | | | | | | | |
| t_{cure} = Härtungszeit | | | | | | | |

### Beispiel 2

### Thermisch vorgehärtete Mischungen

Die Komponenten B, II mit 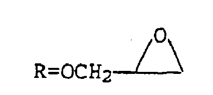 und 1 werden im angegebenen Massenverhältnis gemischt. Die Mischung wird auf einem Glasträger 5 min auf 190°C erhitzt, danach mit einem weiteren Glasträger bedeckt und bei T_{cure} durchgehärtet. Die Resultate sind in Tabelle 5 zusammengefaßt.

**Tabelle 5**

| Gew.-% B | Gew.-% II | Gew.-% 1 | Farbe | T_{cure} |
|---|---|---|---|---|
| 76,77 | 3,74 | 19,49 | orange | 110 |
| 76,77 | 3,74 | 19,49 | orange-grün | 130 |
| 77,40 | 3,14 | 19,46 | rot-orange | 110 |
| 77,40 | 3,14 | 19,46 | rot-orange | 130 |
| 75,56 | 4,90 | 19,54 | blau-grün | 100 |
| 75,56 | 4,90 | 19,54 | blau | 110 |
| 75,56 | 4,90 | 19,54 | blau | 130 |

d) Niedrig schmelzende Mischungen aus den Komponenten C, D und E
Die Mischungen werden über Lösungen hergestellt wie in der allgemeinen Vorschrift beschrieben.
Die thermischen Daten werden mittels DSC aufgenommen. Alle Mischungen bilden nematisch flüssigkristalline Phasen aus.

**Tabelle 6**

| Zusammensetzungen | | | Schmelztemperatur | Klärtemperatur |
|---|---|---|---|---|
| Mol-% C | Mol-% D | Mol-% E | [°C] | [°C] |
| 10 | 90 | | 180 | 205 |
| | 10 | 0,9 | 155 | 172 |
| | 20 | 0,8 | 151 | 172 |
| | 30 | 0,7 | 149 | 175 |
| | 35 | 0,65 | 148 | 180 |
| | 40 | 0,6 | 154 | 180 |
| | 50 | 0,5 | 163 | 183 |
| | 70 | 0,3 | 172 | 197 |
| | 90 | 0,1 | 181 | 210 |

### Beispiel 3

Chiral dotierte Mischungen auf Basis von Verbindungen D, E und II mit R=OCN - Einfluß der Konzentration

Die Mischungen werden über Lösungen hergestellt wie in der allgemeinen Vorschrift beschrieben.

Die thermischen Daten werden mittels DSC aufgenommen. Alle Mischungen bilden eine cholesterisch flüssigkristalline Phase aus.

**Tabelle 7**

| Zusammensetzung | | | | Farbe | T_{cure} | t_{cure} |
|---|---|---|---|---|---|---|
| Gew.-% D | Gew.-% E | Gew.-% II | Gew.-% II | | [°C] | [min] |
| 0,975 | | | 0,025 | IR | 160 | 30 |
| 0,97 | | | 0,03 | hell-orange | 160 | 30 |
| 0,96 | | | 0,04 | orange-rot | 160 | 30 |
| 0,95 | | | 0,05 | blau-grün | 160 | 30 |
| 0,94 | | | 0,06 | blau-violett | 160 | 30 |
| 0,93 | | | 0,07 | violett | 160 | 30 |

| | | | | | | |
|---|---|---|---|---|---|---|
| 0,925 | | | 0,075 | hell-violett | 160 | 30 |
| 0,9 | | | 0,1 | UV | 160 | 30 |
| 0,95 | | 0,05 (R=OH) | | blau-grün | 160 | 30 |
| | 0,96 | | 0,04 | IR | 160 | 30 |
| | 0,94 | | 0,06 | hell-orange | 160 | 30 |
| | 0,92 | | 0,08 | orange-grün | 160 | 30 |
| | 0,90 | | 0,10 | grün-blau | 160 | 30 |
| | 0,88 | | 0,12 | blau-violett | 160 | 30 |

## Patentansprüche

1. Durch thermische Härtung erhältliche, vernetzte cholesterisch flüssigkristalline Ordnungsstruktur aufweisende Flächengebilde, hergestellt aus Mischungen von nematisch flüssigkristallinen Verbindungen oder in nematisch flüssigkristalline Verbindungen übergehende Verbindungen (potentiell nematische Verbindungen) und einer chiralen Komponente der allgemeinen Struktur
(Z-Y¹-A-Y²-M-Y³)ₙ X I
in der die Variablen folgende Bedeutung haben:
A Spacer,
M mesogene Gruppen,
Y¹,Y^{2,}Y³ chemische Bindungen oder die Gruppierungen -O-; -S-; -CO-O-; -O-CO-; -O-CO-O-; -CO-N(R)- oder -N(R)-CO-,
R Wasserstoff oder C₁-C₄-Alkylgruppen,
X ein Rest der Formel 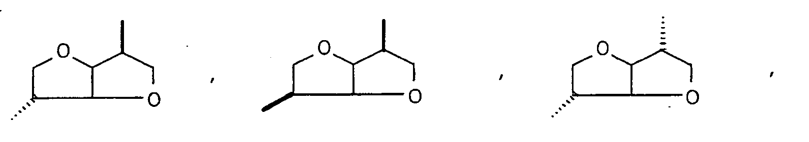 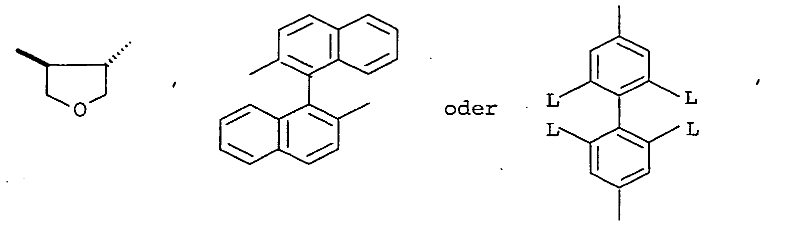
n 2 bis 6 und
Z
a) mindestens einmal ein Rest mit einer Isocyanat-, Isothiocyanat-, Cyanat-, Thiiran-, Aziridin-, Carboxyl-, Hydroxy- oder Aminogruppe und
b) die übrigen Reste Wasserstoff oder nicht-reaktive Reste sind, wobei die Reste
L unabhängig voneinander für C₁-C₄-Alkyl oder -Alkoxy, Halogen, -CO-OR, -O-CO-R, -CO-NH-R oder -NH-CO-R stehen und
die Reste Z, Y¹, Y², Y³, A und M, da sie n-mal in I enthalten sind, gleich oder verschieden sein können,
wobei zumindest die nematische und/oder die in die nematisch flüssigkristalline Verbindung übergehende Komponente mindestens eine thermisch polymerisierbare Gruppe tragen.

2. Durch thermische Härtung erhältliche, vernetzte cholesterisch flüssigkristalline Ordnungsstruktur aufweisende Flächengebilde, hergestellt aus Mischungen von nematisch flüssigkristallinen Verbindungen oder in nematisch flüssigkristalline Verbindungen übergehende Verbindungen (potentiell nematische Verbindungen) und einer chiralen Komponente 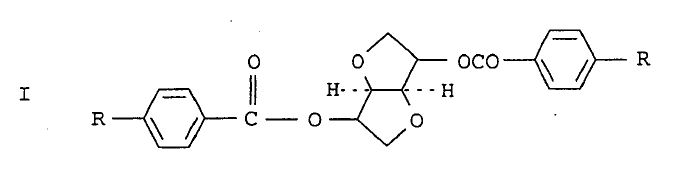 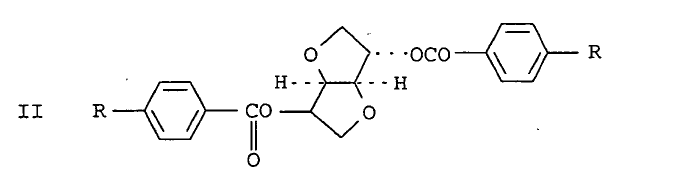 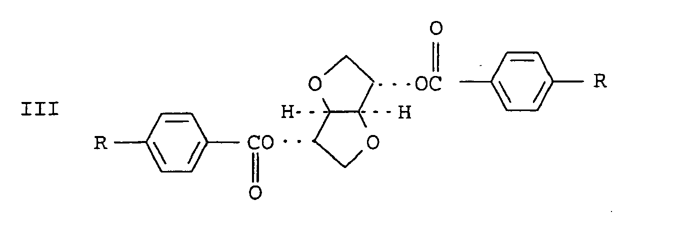 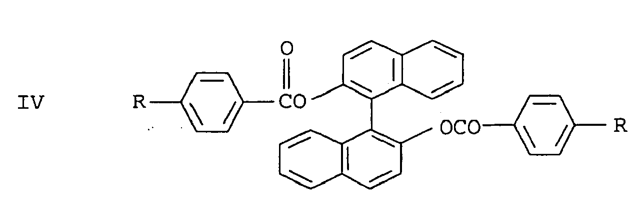 oder 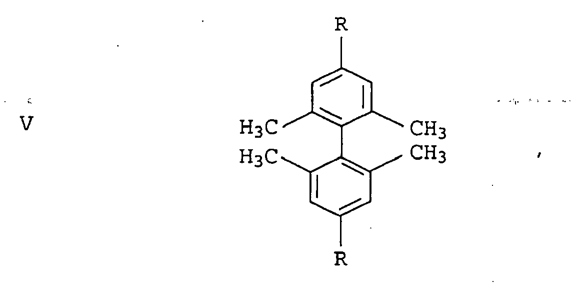 wobei R OH, OCN, ONC oder 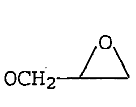 ist,
wobei zumindest die nematische und/oder die in die nematisch flüssigkristalline Verbindung übergehende Komponente mindestens eine thermisch polymerisierbare Gruppe tragen.

3. Flächengebilde gemäß Anspruch 1 oder 2, **dadurch gekennzeichnet, dass** die nematisch(en) Komponente(n) zwei thermisch polymerisierbare Gruppen trägt (tragen).

## Claims

1. A sheet-like structure obtainable by thermal curing and having a crosslinked cholesteric liquid crystalline ordered structure, prepared from mixtures of nematic liquid crystalline compounds or compounds undergoing transitions to nematic liquid crystalline compounds (potentially nematic compounds) and of a chiral component of the general structure
(Z-Y¹-A-Y²-M-Y³)ₙ X I
in which the variables have the following meanings:
A spacer,
M mesogenic groups,
Y¹,Y²,Y³ chemical bonds or the groups -0-; -S-; -CO-O-; -O-CO-; -O-CO-O-; -CO-N(R)- or -N(R)-CO-,
R hydrogen or C₁-C₄-alkyl groups,
X a radical of the formula 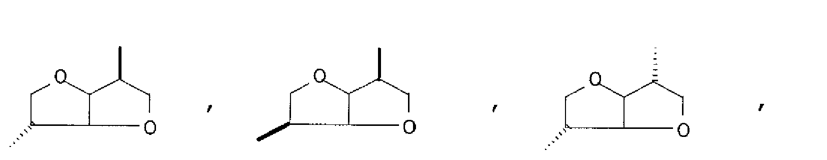 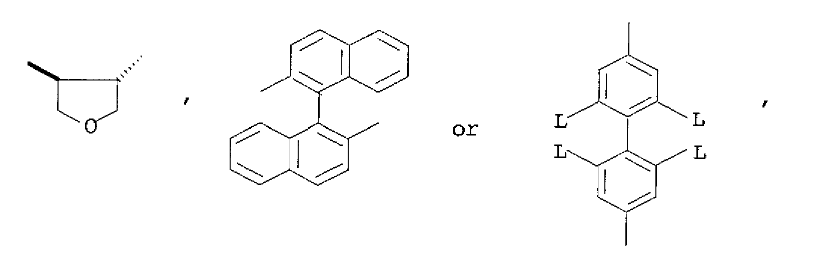
n 2 to 6 and
Z
a) in at least one case a radical having an isocyanate, isothiocyanate, cyanate, thiirane, aziridine, carboxyl, hydroxyl or amino group and
b) the other radicals are hydrogen or unreactive radicals, where the radicals
L are, independently of one another, C₁-C₄-alkyl or -alkoxy, halogen, -CO-OR, -O-CO-R, -CO-NH-R or -NH-CO-R, and
the radicals Z, Y¹, Y², Y³, A and M, can, because they are present n times in I, be identical or different,
where at least the nematic component and/or the component undergoing transition to the nematic liquid crystalline compound has at least one thermally polymerizable group.

2. A sheet-like structure obtainable by thermal curing and having a crosslinked cholesteric liquid crystalline ordered structure, prepared from mixtures of nematic liquid crystalline compounds or compounds undergoing transitions to nematic liquid crystalline compounds (potentially nematic compounds) and of a chiral component 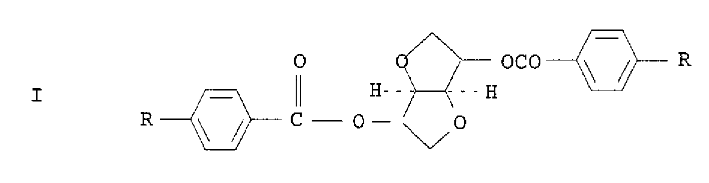 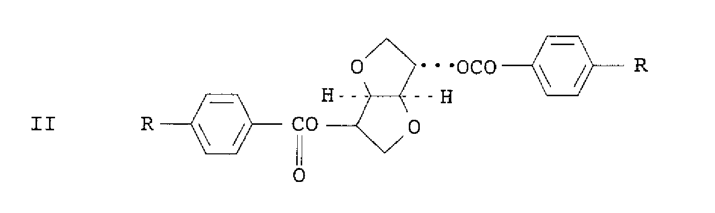 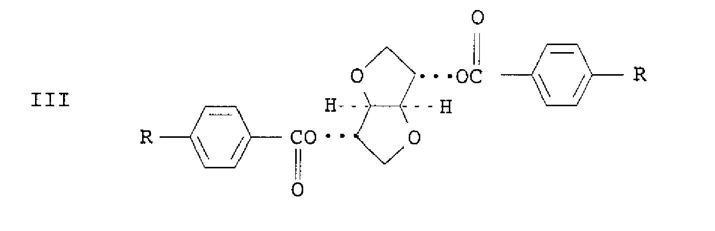 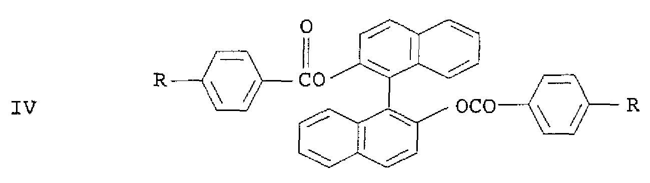 or 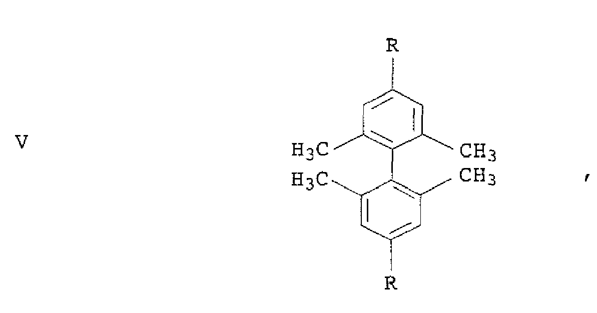 where R is OH, OCN, ONC or 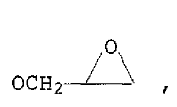 where at least the nematic component and/or the component undergoing transition to the nematic liquid crystalline compound has at least one thermally polymerizable group.

3. The sheet-like structure according to claim 1 or 2, wherein the nematic component(s) has (have) two thermally polymerizable groups.

## Revendications

1. Eléments plats ayant une structure réticulée à cristaux liquides cholestériques que l'on peut obtenir au moyen d'un durcissement thermique, que l'on a préparé à partir de mélanges constitués de composés cristallins liquides nématiques ou de composés aptes à la transition vers les composés cristallins liquides nématiques (composés potentiellement nématiques) et d'un composant chiral, de structure générale :
(Z-Y¹-A-Y²-M-Y³)ₙX I
dans laquelle les variables prennent la signification suivante :
A représente un espaceur,
M représente des groupes mésogènes
Y¹, Y², Y³ représentent des liaisons chimiques ou des groupements -O- ; -S- ; -CO-O- ; -O-CO- ; -O-CO-O- ; -CO-N(R)- ou -N(R)-CO-,
R représente un atome d'hydrogène ou des groupes alkyle en C₁ à C₄,
X représente un groupe de formule 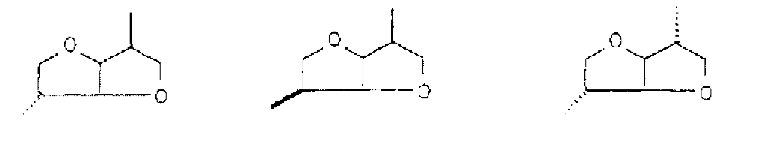 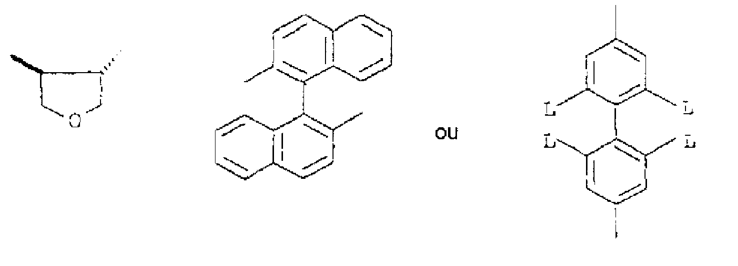
n vaut 2 à 6 et
Z représente a) au moins une fois un groupe comportant un groupe isocyanate, isothiocyanate, cyanate, thiirane, aziridine, carboxyle, hydroxy ou amino et les autres groupes représentant un atome d'hydrogène ou bien des groupes non réactifs, les groupes
L représentant, indépendamment les uns des autres, un groupe alkyle ou alcoxy en C₁ à C₄, un atome d'halogène, un groupement -CO-OR, -O-CO-R, -CO-NH-R ou -NH-CO-R et
les groupes Z, Y¹, Y², Y³, A et M, puisqu'ils sont contenus n fois dans I, pouvant être identiques ou différents,
grâce à quoi au moins le composant nématique et/ou le composant apte à la transition vers le composé cristallin liquide nématique portent au moins un groupe qui est polymérisable par voie thermique.

2. Eléments plats ayant une structure réticulée à cristaux liquides cholestériques que l'on peut obtenir au moyen d'un durcissement thermique, que l'on a préparé à partir de mélanges constitués de composés cristallins liquides nématiques ou de composés aptes à la transition vers les composés cristallins liquides nématiques (composés potentiellement nématiques) et d'un composant chiral 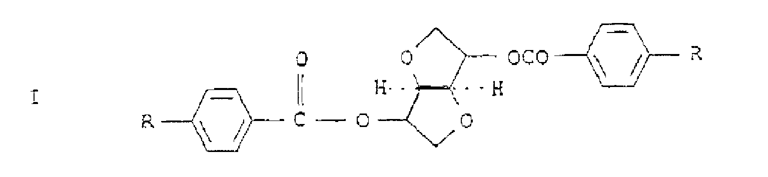 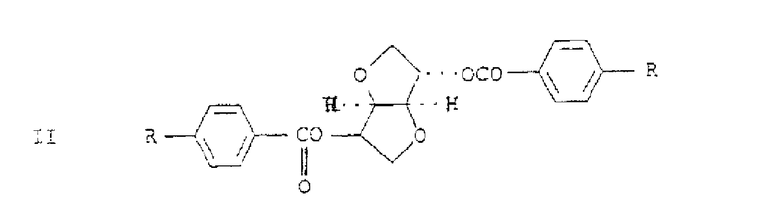 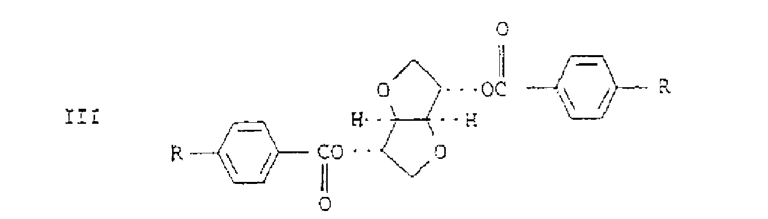 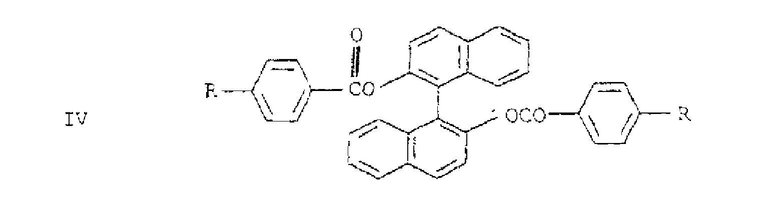 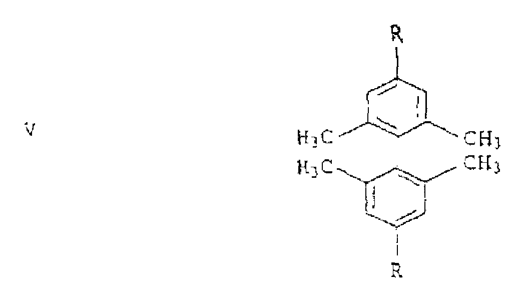 dans lesquelles R représente un groupement OH, OCN, ONC ou 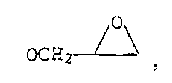 grâce à quoi au moins le composant nématique et/ou le composant apte à la transition vers le composé cristallin liquide nématique portent au moins un groupe qui est polymérisable par voie thermique.

3. Eléments plats selon la revendication 1 ou 2, **caractérisés en ce que** le composant nématique ou les composants nématiques présentent deux groupes qui sont polymérisables par voie thermique.
